# EUROPEAN PATENT APPLICATION

(11) **EP 3 623 221 A1**
(43) Date of publication of application: **18.03.2020**
(21) Application number: 19195326.4
(22) Date of filing: 04.09.2019
(51) Int. Cl.: B60Q 1/00, B60Q 1/28, B60Q 1/38, F21S 43/14, F21S 43/20

(54) **HEADLAMP FOR MOTOR VEHICLE**

(30) Priority: 13.09.2018 ES 201830888
(71) Applicant: Seat, S.A., 08760 Martorell (ES)
(72) Inventor: PARIS GARCIA, Maite, 08760 MARTORELL (ES); MARTINEZ DIESTE, Sara, 08760 MARTORELL (ES); CALDERÓN FERNÁNDEZ, Amara, 08760 MARTORELL (ES)
(74) Representative: Ponti & Partners, S.L.P

(57) **Abstract**

The present invention refers to a headlamp (100) for a motor vehicle, which comprises a housing (104), a lampshade (106) mounted on the housing (104), and where the housing (104) and lampshade (106) define a cavity. In the cavity there is a first light emitting module (108), which emits a first luminous radiation, and the lampshade (106) is configured to extract the first luminous radiation substantially in a first direction. The headlamp (100) is characterised by the fact that it comprises a light-emitting surface (116) arranged at a substantially lateral end of the headlamp (100), and a second light-emitting module (110) arranged in the cavity, where the second light-emitting module (110) emits a second luminous radiation.

In addition, the invention concerns a motor vehicle comprising such a headlamp.

## Description

### Technical field

This invention generally, in the first aspect, concerns a headlamp for a motor vehicle. A second aspect of the invention concerns a motor vehicle comprising such a headlamp.

### State of the art

Headlamps on motor vehicles must comply with regulations in the relevant market that dictate the framework of functionality with respect to the light emission provided. These regulations govern, *inter alia*, the minimum and maximum luminous intensity (lumens) and the angular range of the illumination with respect to the direction of travel of the vehicle.

In general, a headlamp consists of a housing and a lampshade mounted on the housing. The lampshade usually has a level of transparency which allows the passage of light at least to some extent, while the housing is generally formed by an opaque material that does not allow light to pass through. For this reason, the resulting illumination is partly determined by the spatial configuration of the housing and lampshade.

In addition, recent trends in the front-end design of the vehicle reduce the space in the side corners of the vehicle, thereby reducing the size available for the headlamp housing and therefore the cavity defined by the housing. Since this cavity generally contains the illumination assembly, such space reduction can be problematic for the satisfactory illumination ratio and/or compliance with illumination regulations.

In the state of the art, headlights are known that meet the characteristics of the preamble of Claim 1 of this invention, i.e. they comprise a first emitter and a second emitter.

For example, document US2018/0170247 A1 proposes a headlamp with two light emitters. However, the objective of this headlamp is to provide an additional light emitter to generate an aesthetic illumination through the front grille of the vehicle. This document does not cover possible illumination failures with regard to regulatory compliance. It concerns an indirect, non-functional illumination of the front grille, where a user in the front area of the vehicle does not directly perceive the light beams generated by the additional light emitter.

It therefore seems necessary to offer an alternative to the state of the art which provides a headlamp configured in such a way as to provide adequate illumination that can satisfy the relevant regulations, and that does not suffer from the disadvantages of the headlamps known in the state of the art.

### Description of the invention

To this end, a first aspect of the present invention concerns a headlamp for a motor vehicle, which comprises a housing, a lampshade mounted on the housing, and where the housing and lampshade define a cavity. In the cavity there is a first light emitting module, which emits a first luminous radiation, and the lampshade is configured to extract the first luminous radiation substantially in a first direction.

The headlamp is characterised by the fact that it comprises a light-emitting surface arranged at a substantially lateral end of the headlamp, and a second light-emitting module arranged in the cavity, where the second light-emitting module emits a second luminous radiation.

In addition, the first light emitting module and the second light emitting module are switched on simultaneously, and the light output surface is configured to extract the second light radiation substantially in a second direction. The first direction and the second direction are substantially different. The second light-emitting module, facing the side of the headlamp and emitting light behind the grille, shall be used to illuminate those areas of visibility where the first light-emitting module does not cover. This is preferably a headlamp for a motor vehicle. This configuration advantageously results in a satisfactory illumination with respect to the frontal area of the vehicle.

In some examples of embodiment of the headlamp, the first light emitting module comprises at least one first light emitter, and where the second light emitting module comprises at least one third light emitter, where the at least one first light emitter and the at least one third light emitter are configured to generate a first illumination function. Thus, the first illumination function, e.g. a flasher signal, is generated by both the first light emitter and the second light emitter. The second light-emitting module shall complement the range or angle of the first light-emitting module, the range of this first light-emitting module being insufficient to exceed the described approval requirements.

In addition, the first light emitting module may additionally comprise at least one second light emitter, and where the second light emitting module additionally comprises at least one fourth light emitter, where at least one second light emitter and at least one fourth light emitter are configured to generate a second illumination function. Thus, the second illumination function, e.g. a position light illumination, is generated by both the first light emitter and the second light emitter. The second light-emitting module shall complement the range or angle of the first light-emitting module, the range of this first light-emitting module being insufficient to exceed the described approval requirements.

According to some examples of embodiment, the first light emitting module is configured to turn on the at least one first light emitter and/or the at least one second light emitter, and where the second light emitting module is configured to turn on the at least one third light emitter or the at least one fourth light emitter. This configuration advantageously facilitates the control of the different light emitters through the first module as the main structure. In order to optimise the space occupied by the second light emitting module, both the light generated by the third light emitter and that generated by the fourth light emitter are extracted by the same light output surface, which has reduced dimensions. In order not to produce mixtures of colours and/or intensities, the first function and illumination and the second function of illumination cannot be generated simultaneously by the second light emitting module.

In some examples of embodiment, the first light emitting module is arranged at one end of the cavity, and the second light emitting module is arranged at a second end of the cavity. This configuration advantageously allows illumination to be provided from different positions within the cavity, resulting in illumination in different directions and/or with different ranges. This configuration facilitates the complement or mutual supplement of the luminous intensity or the luminous range between the light emitters. In some examples of embodiment, the first end is arranged in the cavity substantially opposite to the second end.

In other examples of embodiment, the first and second light emitting modules are operationally connected so that the first light emitting module governs the second light emitting module. This simplifies the control of light emitters, particularly when they are configured in such a way that the second light emitting module exerts the same illumination functions as the first light emitting module, and on/off commands are received in the second light emitting module directly from the first light emitting module, not requiring the second light emitting module to be directly connected to the central unit.

Alternatively, in some embodiments, the first light emitting module and the second light emitting module are governed by a central control unit and therefore individually connected to that central control unit.

In some embodiment examples, the headlamp comprises an optical element arranged between the second light-emitting module and the light-emitting surface, where the optical element is configured to direct at least one fraction of the second luminous radiation through the light-emitting surface.

In some examples of embodiment, the optical element includes a lens, which advantageously allows materials and parameters to be selected to manipulate the incident light in the desired way.

In an example of embodiment, the optical element comprises an optical light reflector, which advantageously provides a cost-effective mechanism for manipulating and/or redirecting incident illumination.

In some examples of embodiment, the optical element includes a light guide, which advantageously provides spatial flexibility with respect to light redirection.

As mentioned above, the headlamp comprises a single optical element for modifying the light properties of the light generated by the second light-emitting module, in particular for directing those light beams towards the light-emitting surface. In this way, the space occupied by the second light emitting module is reduced, thus reducing the complexity of the unit. That is why, in the particular embodiment in which the second light-emitting module comprises a third light-emitting module and a fourth light-emitting module, both light-emitting modules cannot be activated simultaneously, but must be activated sequentially. Alternatively, the headlamp comprises an optical element associated with each of the light emitters comprising the second light emitting module.

In some examples, the light-emitting surface is an opening in the housing. In this configuration the contour of the housing can be used to define an orifice that will allow light output improving, for example, as far as illumination angles are concerned.

According to some examples of embodiment, the lampshade comprises a mask, where the mask defines the light output surface, so that the lampshade integrates the light output surface. The advantageous use of a mask allows, among other things, the retroactive adjustment of the contour of the housing opening. Therefore, it can be a cost-effective mechanism to implement a novel illumination assembly in an existing housing.

In some examples of embodiment, where the first light emitting module (108) comprises at least one LED device ("Light-Emitting Diode") and at least one first PCB device (128) arranged at the first end of the headlamp (130), where at least one first PCB device (128) is configured to control such LED devices (124, 126), and where the second light emitting module (110) comprises at least one LED device (Light-Emitting Diode) and at least one second PCB device (129) at the second end of the headlamp (132), where at least one second PCB device (129) is operationally connected to the first PCB device (128) via a wiring (122). This configuration advantageously allows the synchronised control of the respective LED devices, which allows the first PCB device to govern the second PCB device, simplifying the electronics of the whole.

An LED ("Light-Emitting Diode") device generally consumes less energy than other alternatives. In addition, these light emitters can include light emitters of different colours, thus carrying out different illumination functions.

Alternatively, in other embodiment examples, each PCB device is individually connected to the central control unit. This advantageously facilitates centralised control of the light-emitting modules, which can be useful in a configuration where each light-emitting module separately exerts a particular illumination function.

In another aspect, the invention refers to a motor vehicle, comprising at least one headlamp as described in this disclosure, and which is characterised by the fact that at least one fraction of the luminous radiation redirected through the aperture propagates in the direction of a substantially centralised area opposite the vehicle. In this way, satisfactory illumination can be provided, which can also meet the scope requirements of the regulation.

Preferably, the optical element is configured in such a way that it redirects at least one fraction of the second luminous radiation, so that the redirected luminous radiation reaches a minimum angular distance with respect to a vertical plane intersecting the front end of the vehicle.

Preferably, the optical element is configured in such a way that it redirects at least one fraction of the second luminous radiation in such a way that the redirected luminous radiation reaches a minimum angular distance of 45° from a vertical plane intersecting the front end of the vehicle. Thus, the luminous radiation generated by the second light emitting module complements the luminous radiation generated by the first light emitting module, achieving a satisfactory and sufficient angle.

In some embodiments, at least one fraction of the light radiation redirected through the aperture is spatially oriented in such a way that it propagates through the holes of a grille or front grille of the vehicle.

### Brief description of the drawings

The above and other advantages and characteristics will be more fully understood from the following detailed description of some examples of embodiment with reference to the attached drawings, which should be taken for illustrative and not limitative purposes, in which:
Figure 1 is a perspective view of the headlamp proposed by a first aspect of the present invention.
Figure 2 is a schematic diagram illustrating a detail of an example of embodiment.
Figure 3 is a detailed upper transverse view and of a second end of the proposed headlamp according to a first example of embodiment.
Figure 4 is a detailed upper transverse view of a second end of the proposed headlamp according to a second example of embodiment.

### Detailed description of some examples of embodiment

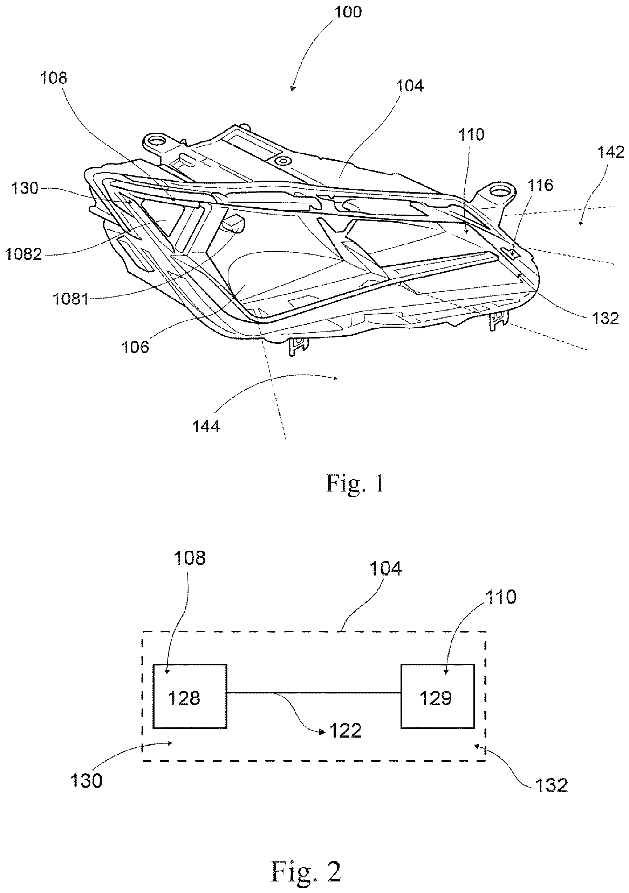

In the attached figures there is an illustration of an example of embodiment of the headlamp 100 for a motorised vehicle or automobile in a first aspect of the invention for which it comprises, as it is appreciated in Figure 1, a housing 104 that contains a lampshade 106. The lampshade 106 provides an opening or light-emitting surface. In addition, the headlamp has a first light-emitting module 108 and a second light-emitting module 110, both arranged in the cavity. The headlamp in this example is a headlamp on the right front side of the vehicle (taking as a reference a user positioned inside the vehicle compartment and facing the direction of travel of the vehicle). Thus, the first light-emitting module 108 is configured to emit a first luminous radiation 144 through the lampshade 106. The first light-emitting module 108 is located at the first end 130 of the cavity, particularly at the left end of the cavity, as shown in Figure 1. The first light emitting module 108 would be the main emitting module and that primarily responsible for generating a first illumination function.

This first light emitting module 108 comprises a first light emitter 1081 and a plurality of optical elements to modify the light properties of the light generated by the first light emitter 1081, obtaining the first light radiation 144.

Due to space requirements in the frontal side of the vehicle, design requirements or other requirements, the first light radiation 144 does not comply with type-approval requirements, in particular with regard to range or angle in the horizontal plane. That is why the headlamp of the present invention has a second light emitting module 110 arranged also in the cavity and, in particular, in a second end 132 of the cavity (right end of the cavity, according to Figure 1). This second light emitting module 110 generates a second luminous radiation 142 in a second direction, different from the first direction, in order to complement the range or angle of illumination in the horizontal plane of the first illumination module 108. Thus, both the first light emitting module 108 and the second illumination module 110 are switched on simultaneously in order to meet the approval requirements.

To achieve this, the headlamp comprises a light-emitting surface of 116, arranged at one side of the headlamp. As shown in Figure 1, the light-emitting surface 116 is arranged on a surface substantially perpendicular to the plane comprising the lampshade 106, in other words, on a lateral surface of the lampshade 104. Therefore, the second light emitting module emits light towards one side of the headlamp 100 in order to increase the range or angle in the horizontal plane.

In this way, the light radiation generated by the second light-emitting module 110 and extracted from the headlamp 100 through the aperture 116 spreads to a central region of the vehicle, but in such a way that it reaches a minimum angular distance from a vertical plane. Thus, as an example, the first direction of emission generated by the first transmitter module 108 and the second direction of emission generated by the second light transmitter 110 diverge 45º in a horizontal plane.

The second light radiation will be directed towards the front grille of the vehicle. Thus, the second luminous radiation will be propagated through the holes of the frontal grille of the vehicle, obtaining a direct illumination towards the frontal zone of the vehicle.

In the schematic embodiment of Figure 2, the housing 104 of the headlamp 100 can be seen. Specifically, of the same right-hand side headlamp 100 in Figure 1. Thus, the first light-emitting module 108 comprises a first PCB 128. This first light-emitting module 108 is located at the first end 130 of headlamp 100. At the opposite end, specifically the second end 132 of the headlamp 100, the second light emitting module 110 can be found, which comprises a second PCB 129. Both the first PCB 128 and the second PCB 129 are connected via 122 wiring, so that both light emitters are switched on simultaneously. It is understood that each light-emitting module additionally consists of LED ("Light-Emitting Diode") devices and other optical elements to modify the light properties of the light generated by LED devices.

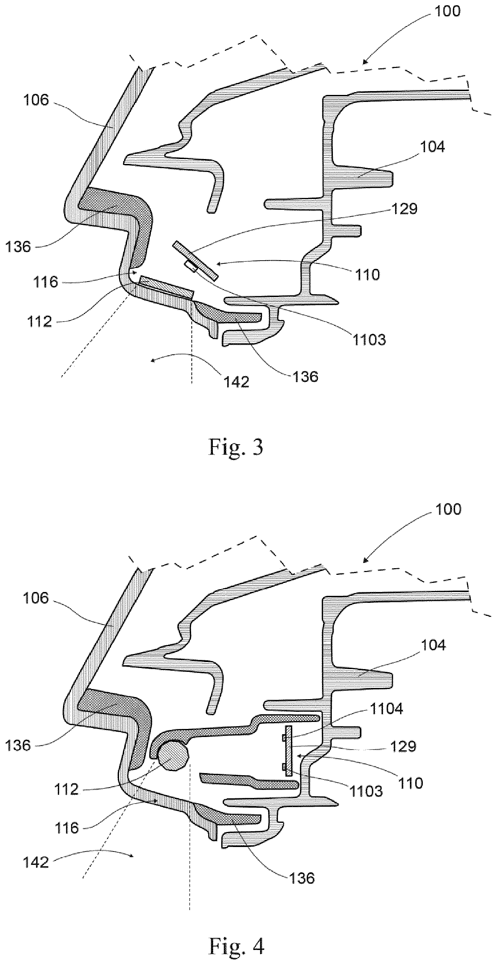

Figure 3 shows a detailed horizontal section view of the second end 132 of the headlamp 100. In particular, the second light-emitting module 110 is observed, which emits light through the light-emitting surface 116. The second luminous radiation 144 is deviated from the first luminous radiation 142 (not represented in Figure 3), but which would be transmitted through the lampshade 106.

The light output surface 116 is on one side or substantially lateral end of the headlamp 100 or housing 104. The light-emitting surface 116 in the lampshade 106 can, for example, be defined by means of a mask 136. Such a mask 136 may comprise a monolithic structure or may be provided in several parts thus defining the light-emitting surface 116. In the example shown, the mask 136 defines the light output surface 116, so that the lampshade 106 integrates the light output surface 116. Alternatively, the light output surface 116 can be defined simply by the contour of the housing 104 around the lampshade 106, or by means of a hole or orifice made in the surface of the housing 104.

In order to correctly direct the light beams generated by the second light-emitting module 110 towards the light-emitting surface 116 and thus towards the side area of headlamp 100, this headlamp 100 also includes, in an example of embodiment, an optical element 112. In the specific example in Figure 3, it is an optical reflector that redirects the light beams. Alternatively, the optical element can also be a lens.

According to the example of embodiment in Figure 3, the second light emitting module 110 comprises a second PCB 129 and a third light emitting module 1103. This third light emitter 1103 performs, for example, the position light function. Additionally, the light emitting module 108 comprises a first light emitter 1081, not seen in the figure, where the third light emitter 1103 and the first light emitter 1081 generate the same illumination function, the second light emitting module 110 complementing the angle or range not covered by the first light emitting module 108.

The first light emitting module 108 and the second light emitting module 110 can be connected and controlled by a central control unit, not shown in the figures. Therefore, both modules will be electrically connected to the central control unit, not requiring them to be connected to each other.

Alternatively, the first light-emitting module 108 and the second light-emitting module 110 are connected by a wiring 122, so that the first light-emitting module 108 governs the second light-emitting module 110, simplifying the electronic schematic of the headlamp. Thus, the first PCB 128 will issue on/off commands to the second PCB 129.

According to the alternative embodiment example in Figure 4, the second light emitting module 110 comprises a second PCB 129, a third light emitter 1103 and a fourth light emitter 1104. This third light emitter 1103 performs, for example, the position light function. This fourth light emitter 1104 performs the indicator signalling function. Additionally, the light emitting module 108 comprises a first light emitter 1081, not seen in the figure, where the third light emitter 1103 and the first light emitter 1081 generate the same illumination function. In addition, the light emitting module 108 comprises a second light emitter 1082, not seen in the figure, where the fourth light emitter 1104 and the second light emitter 1082 generate the same illumination function complementing the second light emitting module 110 the angle or range not covered by the first light emitting module 108.

In this last configuration, the first light emitting module 108 is configured to simultaneously switch on the first light emitter 1081 with the second light emitter 1082 or alternatively (not simultaneously) switch on the first light emitter 1081 and the second light emitter 1082. Thus, both illumination functions can be activated simultaneously by the first light emitting module 108, since each light emitter comprises its own associated optical elements, so that the light can be treated and adapted individually. By contrast, the second light emitting module 110 is configured to alternatively (not simultaneously) switch on the third light emitter 1103 or the fourth light emitter 1104. The reason is that, in a small space, no optics can be associated with each of the light emitters, so both light emitters share both the optical element 112 and the light output surface 116. Thus, one of the two functions generated by the second light-emitting module will have priority over the other function.

The optical element 112 may include, for example, an optical guide or light guide, which redirects at least one fraction of the luminous radiation emitted by the second light emitting module 110 towards a direction in a centralised area in front of the vehicle. Figure 4 shows a horizontal section of an elongated cylindrical light guide, which directs the light beams towards the output surface 116 by means of optical structures arranged inside the light guide. The light emitter and optical element 112 are configured in such a way that at least one fraction of the redirected radiation passes through the vehicle grille, thus providing illumination in front of the vehicle. This second direction (and range) is shown schematically by the second light radiation 142 or illuminated field. The optical guide can be mounted in the cavity by means of a bracket that defines its position and orientation with respect to the housing 104 and the light-emitting modules.

A person skilled in the art could make changes and modifications to the examples of embodiment described without going beyond the scope of the invention as defined in the attached claims.

## Claims

1. Headlamp (100) for a motor vehicle, comprising:
- a housing (104),
- a lampshade (106) mounted on the housing (104), where the housing (104) and lampshade (106) define a cavity,
- a first light-emitting module (108) arranged in the cavity, where the first light-emitting module (108) emits a first luminous radiation, where the lampshade (106) is configured to extract the first luminous radiation substantially in a first direction,
**characterised in that** the headlamp (100) comprises:
- a light-emitting surface (116) arranged at a substantially lateral end of the headlamp (100), and
- a second light emitting module (110) arranged in the cavity, wherein the second light emitting module (110) emits a second luminous radiation, where the first light emitting module (108) and the second light emitting module (110) are switched on simultaneously, where the light output surface (116) is configured to extract the second luminous radiation substantially in a second direction, where the first direction and the second direction are substantially different.

2. Headlamp (100) according to claim 1, wherein the first light emitting module (108) comprises at least one first light emitter (1081), and where the second light emitting module (110) comprises at least one third light emitter (1103), where the at least one first light emitter (1081) and the at least one third light emitter (1103) are configured to generate a first illumination function.

3. Headlamp (100) according to claim 2, wherein the first light emitting module (108) additionally comprises at least one second light emitter (1082), and where the second light emitting module (110) additionally comprises at least one fourth light emitter (1104), where the at least one second light emitter (1082) and the at least one fourth light emitter (1104) are configured to generate a second illumination function.

4. Headlamp (100) according to claim 3, wherein the first light emitting module (108) is configured to turn on at least one first light emitter (1081) and/or at least one second light emitter (1082), and where the second light emitting module (110) is configured to turn on the at least one third light emitter (1103) or the at least one fourth light emitter (1104).

5. Headlamp (100) according to any of the above claims, wherein the first light-emitting module (108) is arranged at a first end (130) of the cavity, and the second light-emitting module (100) is arranged at a second end (132) of the cavity, and where the first end (130) is arranged in the cavity substantially opposite to the second end (132).

6. Headlamp (100) according to any of the above claims, wherein the first and second light emitting module (108, 110) are operationally connected so that the first light emitting module (108) controls the second light emitting module (110).

7. Headlamp (100) according to any of the claims 1 to 6, wherein the first light emitting module (108) and the second light emitting module (110) are controlled by a central control unit.

8. Headlamp (100) according to any of the above claims, comprising an optical element (112) arranged between the second light-emitting module (110) and the light-emitting surface (116), where the optical element (112) is configured to direct at least one fraction of the second luminous radiation through the light-emitting surface (116).

9. Headlamp (100) according to claim 8, wherein the optical element (112) comprises a lens.

10. Headlamp (100) according to any one of the above claims, wherein the light output surface (116) is an opening arranged in the housing (104).

11. Headlamp (100) according to any of the claims 1 to 12, wherein the lampshade (106) comprises a mask (136), where the mask (136) defines the light output surface (116), in such a way that the lampshade (106) integrates the light output surface (116).

12. Headlamp (100) according to any of the above claims, wherein the first light-emitting module (108) comprises at least one LED ("Light-Emitting Diode") device and at least one first PCB device (128) arranged at the first end of the headlamp (130), where the at least one first PCB device (128) is configured to control such LED devices, and where the second light emitting module (110) comprises at least one LED ("Light-Emitting Diode") device and at least one second PCB device (129) at the second end of the headlamp (132), where the at least one second PCB device (129) is operationally connected to the first PCB device (128) via a wiring (122).

13. Motor vehicle, comprising the headlamp (100) according to any of the claims 1 to 12, **characterised in that** at least one fraction of the light radiation redirected through the aperture (116) propagates in the direction of a substantially centralised region in front of the vehicle.

14. Motor vehicle according to claim 13, wherein the optical element (112) is configured in such a way that it redirects at least one fraction of the second luminous radiation, so that the redirected luminous radiation reaches a minimum angular distance from a vertical plane intersecting the front end of the vehicle.

15. Motor vehicle according to claims 13 to 14, wherein at least one fraction of the light radiation redirected through the aperture (116) is spatially oriented in such a way that it propagates through the holes of a front grille of the vehicle.
